# EUROPEAN PATENT APPLICATION

(11) **EP 1 793 582 A2**
(43) Date of publication of application: **06.06.2007**
(21) Application number: 06124648.4
(22) Date of filing: 23.11.2006
(51) Int. Cl.: H04N 1/32, H04N 1/44, G06F 17/30, G06Q 10/00

(54) **Storage of image data in an image processing apparatus reserved for use at a meeting, in a manner allowing efficient retrieval**

(30) Priority: 02.12.2005 JP 2005349451
(71) Applicant: CANON KABUSHIKI KAISHA, Ohta-ku Tokyo 146-8501 (JP)
(72) Inventor: Hayashi, Tomonori, Ohta-ku Tokyo 146-8501 (JP)
(74) Representative: TBK-Patent

(57) **Abstract**

A data storage area dedicated to reservation information is generated in an image storage unit on the basis of the reservation information specified by using an image processing apparatus. An access right to the generated data storage area is set on the basis of the reservation information. A data storage area serving as the storage destination of the image data is determined on the basis of the current time information when image data to be processed is input, and the reservation information corresponding to the data storage area generated in the image storage unit.

## Description

### BACKGROUND OF THE INVENTION

### Field of the Invention

The present invention relates to an information processing system configured by connecting, via a network, an external terminal, an image processing apparatus, and an information processing apparatus which manages the schedule of using a meeting room where the image processing apparatus is installed.

### Description of the Related Art

There is conventionally proposed a copying machine capable of temporarily storing, in a memory such as the hard disk of the machine, image data scanned by a scanner or image data obtained by expanding PDL data sent from a host computer via a network into bitmap data. Some copying machines of this type comprise a function of repetitively reading out arbitrary image data from image data stored in the memory and printing out the readout image data.

These copying machines are connectable to a finisher having finishing functions such as stapling, punching, folding, and bookbinding. The copying machine saves finishing settings and image layout settings such as double-sided setting as document attributes in the memory at the same time as save of image data. Some copying machines have a box function of printing out saved image data specified on the basis of the document attributes asynchronously to image input.

The box function prepares in advance box folders having box names such as box numbers 0 to 99 as areas for storing image data for respective users and groups. Image data are sorted and saved in box folders corresponding to respective users and groups. A user inputs a user ID and password corresponding to a desired box folder, and is permitted to access the box folder corresponding to the user ID.

To save image data in a box folder or extract image data saved in a box, a user must designate a target box number and operate the box.

Japanese Patent Laid-Open No. 2005-39411 discloses a related prior art. According to Japanese Patent Laid-Open No. 2005-39411, a management server stores a management table which makes location information and identification information (box ID and box name) of each box folder in a multifunctional peripheral correspond to user identification information representing an owner. When executing a predetermined job including access to a box folder, the multifunctional peripheral accepts designation of a box folder by a user through identification information. The multifunctional peripheral acquires location information of the box folder designated by the identification information from the management server, accessing the designated box folder.

The above-described box function prepares in advance storage destination box folders, and allows a user to generate a box folder with an arbitrary name. In this case, the degree of freedom of the user increases, but he must always be aware of the box folder name of the save destination. The user cannot easily access target data unless he recognizes which box folder saves target data.

Many unspecified users access box folders in an application in which a digital copying machine having the box function is installed in a meeting room and stores distribution materials of meetings and the minutes of meetings in box folders. In this situation, box folders must be generated in consideration of members who are always permitted to access box folders. In addition, access to target data becomes difficult unless meeting members fully know a sufficient operation policy such as the box folder naming convention or data storage destination rulemaking.

### SUMMARY OF THE INVENTION

The present invention has been made to solve the conventional drawbacks, and has as its object to provide an image processing apparatus, an information processing apparatus, a control method therefor, an information processing system, and a program which facilitate storage of materials to be used at a scheduled meeting or the like and can efficiently utilize the image processing apparatus.

According to the present invention, the foregoing object is attained by providing an image processing apparatus having an image storage unit which stores input image data, characterized by comprising:
a generation unit adapted to generate a data storage area corresponding to reservation information in the image storage unit on the basis of the reservation information specified by using the image processing apparatus;
a setting unit adapted to set an access right to the data storage area generated by the generation unit, on the basis of the reservation information; and
a determination unit adapted to determine a data storage area serving as a storage destination of the image data on the basis of current time information when image data to be processed is input, and the reservation information corresponding to the data storage area generated in the image storage unit.

In a preferred embodiment, the reservation information contains a meeting room name of a meeting where the image processing apparatus is installed, a meeting name of the meeting to be held in the meeting room, a name of a user who is to participate in the meeting, and a utilization period of the meeting room.

In a preferred embodiment, the generation unit comprises a name setting unit adapted to generate the data storage area as a folder and set a folder name of the folder on the basis of the meeting name contained in the reservation information.

In a preferred embodiment, the generation unit comprises a name setting unit adapted to generate the data storage area as a folder and set a folder name of the folder on the basis of the utilization period of the meeting room contained in the reservation information.

In a preferred embodiment, the setting unit sets the user name contained in the reservation information as an access right to the data storage area.

In a preferred embodiment, the apparatus further comprises an authentication unit adapted to authenticate a user who operates the image processing apparatus.

In a preferred embodiment, the determination unit determines the data storage area serving as the storage destination of the image data on the basis of the current time information when image data to be processed is input, and a utilization period and user name contained in the reservation information corresponding to the data storage area generated in the image storage unit.

In a preferred embodiment, the apparatus further comprises:
an authentication unit adapted to authenticate a user who operates the image processing apparatus;
a specification unit adapted to specify a data storage area having an access right of a user name authenticated by the authentication unit; and
a display unit adapted to display information stored in the data storage area specified by the specification unit.

According to the present invention, the foregoing object is attained by providing an information processing apparatus which connects to an external terminal and an image processing apparatus via a network and manages a schedule of using a meeting room where the image processing apparatus is installed, characterized by comprising:
a registration unit adapted to register reservation information received from the external terminal in a storage medium;
a specification unit adapted to specify an image processing apparatus installed in a meeting room designated by the reservation information registered by the registration unit; and
an issue unit adapted to issue a request to generate a data storage area corresponding to the reservation information in an image storage unit of the image processing apparatus specified by the specification unit.

In a preferred embodiment, the apparatus further comprises:
a data storage area specification unit adapted to specify a data storage area in the image processing apparatus serving as a storage destination of data when receiving a user name of the external terminal and a meeting name together with a data storage request from the external terminal; and
a notification unit adapted to notify the external terminal of storage destination information representing the data storage area specified by the data storage area specification unit.

According to the present invention, the foregoing object is attained by providing, an information processing system configured by connecting, via a network, an external terminal, an image processing apparatus, and an information processing apparatus which manages a schedule of using a meeting room where the image processing apparatus is installed, characterized in that
the information processing apparatus comprises
a registration unit adapted to register reservation information received from the external terminal in a storage medium,
a specification unit adapted to specify an image processing apparatus installed in a meeting room designated by the reservation information registered by the registration unit, and
an issue unit adapted to issue a request to generate a data storage area corresponding to the reservation information in an image storage unit of the image processing apparatus specified by the specification unit, and
the image processing apparatus comprises
a generation unit adapted to generate a data storage area corresponding to reservation information in the image storage unit on the basis of the reservation information contained in the generation request received from the information processing apparatus,
a setting unit adapted to set an access right to the data storage area generated by the generation unit, on the basis of the reservation information, and
a determination unit adapted to determine a data storage area serving as a storage destination of the image data on the basis of current time information when image data to be processed is input, and the reservation information corresponding to the data storage area generated in the image storage unit.

According to the present invention, the foregoing object is attained by providing a method of controlling an image processing apparatus having an image storage unit which stores input image data, characterized by comprising:
a generation step of generating a data storage area corresponding to reservation information in the image storage unit on the basis of the reservation information specified by using the image processing apparatus;
a set step of setting an access right to the data storage area generated in the generation step on the basis of the reservation information; and
a determination step of determining a data storage area serving as a storage destination of the image data on the basis of current time information when image data to be processed is input, and the reservation information corresponding to the data storage area generated in the image storage unit.

According to the present invention, the foregoing object is attained by providing a program stored in a computer-readable medium, for causing a computer to execute control of an image processing apparatus having an image storage unit which stores input image data, the program causing the computer to execute:
a generation step of generating a data storage area corresponding to reservation information in the image storage unit on the basis of the reservation information specified by using the image processing apparatus;
a set step of setting an access right to the data storage area generated in the generation step on the basis of the reservation information; and
a determination step of determining a data storage area serving as a storage destination of the image data on the basis of current time information when image data to be processed is input, and the reservation information corresponding to the data storage area generated in the image storage unit.

According to the present invention, the foregoing object is attained by providing a method of controlling an information processing apparatus which connects to an external terminal and an image processing apparatus via a network and manages a schedule of using a meeting room where the image processing apparatus is installed, characterized by comprising:
a registration step of registering reservation information received from the external terminal in a storage medium;
a specification step of specifying an image processing apparatus installed in a meeting room designated by the reservation information registered in the registration step; and
an issuance step of issuing a request to generate a data storage area corresponding to the reservation information in an image storage unit of the image processing apparatus specified in the specification step.

According to the present invention, the foregoing object is attained by providing a program stored in a computer readable-medium, for causing a computer to execute control of an information processing apparatus which connects to an external terminal and an image processing apparatus via a network and manages a schedule of using a meeting room where the image processing apparatus is installed, the program causing the computer to execute:
a registration step of registering reservation information received from the external terminal in a storage medium;
a specification step of specifying an image processing apparatus installed in a meeting room designated by the reservation information registered in the registration step; and
an issuance step of issuing a request to generate a data storage area corresponding to the reservation information in an image storage unit of the image processing apparatus specified in the specification step.

Further features of the present invention will become apparent from the following description of exemplary embodiments with reference to the attached drawings.

### BRIEF DESCRIPTION OF THE DRAWINGS

Fig. 1 is a view showing the schematic configuration of a document management system according to an embodiment of the present invention;

Fig. 2 is a sectional view showing the outer appearance of a digital copying apparatus according to the embodiment of the present invention;

Fig. 3 is a block diagram showing the detailed arrangement of a controller unit according to the embodiment of the present invention;

Fig. 4 is a view showing an example of a copy standard window according to the embodiment of the present invention;

Fig. 5 is a view showing an example of a box list window according to the embodiment of the present invention;

Fig. 6 is a view showing an example of a box content window according to the embodiment of the present invention;

Fig. 7 is a view showing an example of a detailed box content window according to the embodiment of the present invention;

Fig. 8 is a flowchart showing a box folder generation process according to the embodiment of the present invention;

Fig. 9 is a flowchart showing a box registration process when registering a scanned image in a box folder according to the embodiment of the present invention;

Fig. 10 is a flowchart showing a data acquisition process according to the embodiment of the present invention; and

Fig. 11 is a flowchart showing a box registration process when registering a PDL image in a box folder according to the embodiment of the present invention.

### DESCRIPTION OF THE EMBODIMENTS

A preferred embodiment of the present invention will now be described in detail with reference to the drawings. It should be noted that the relative arrangement of the components, the numerical expressions and numerical values set forth in this embodiment do not limit the scope of the present invention unless it is specifically stated otherwise.

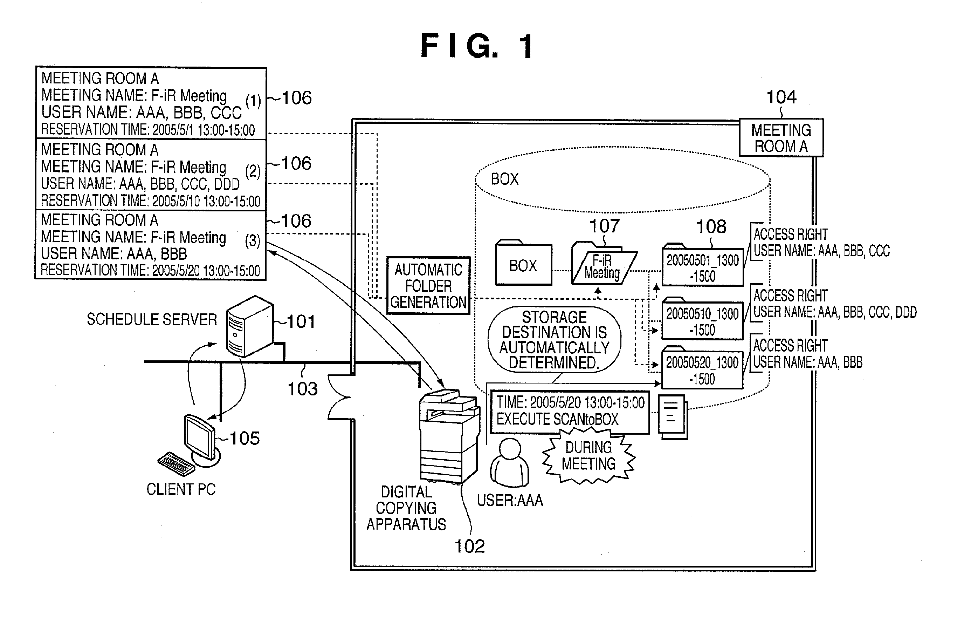

Fig. 1 is a view showing the schematic configuration of a document management system according to the embodiment of the present invention.

The document management system according to the embodiment will be described by exemplifying a case of holding a meeting in meeting room A (104).

As shown in Fig. 1, the document management system comprises a schedule server 101, digital copying apparatus 102, and client PC 105, all of which connect to each other via a LAN (Local Area Network) 103.

The document management system allows setting meeting room reservation information (e.g., a meeting room for use, meeting name, user name, and utilization period) in the schedule server 101 from the client PC 105, and reserving a meeting room.

The schedule server 101 comprises a reservation management table 106 which has already registered pieces of reservation information (1) to (3) for meeting room A. The schedule server 101 manages device information (e.g., a device name, model, and IP address) for specifying a digital copying apparatus set in each meeting room.

When a user reserves a meeting room from the client PC 105, the schedule server 101 specifies a digital copying apparatus 102 installed in the designated meeting room on the basis of set meeting room reservation information. Then, the schedule server 101 generates a new box folder 107 of a name based on the set meeting name, as a dedicated data storage area in the box folder of the specified digital copying apparatus 102.

The schedule server 101 generates a box folder 108 of a file name based on the reservation time under the box folder 107. Simultaneously when generating the box folder 108, the schedule server 101 adds an access right to meeting members registered in the reservation management table 106 set from the client PC 105.

The digital copying apparatus 102 has an identification function of identifying a user. The identification function specifies a box folder to store data among box folders generated by the schedule server 101 on the basis of a user name and use date & time identified in operating the digital copying apparatus 102. The digital copying apparatus 102 can automatically store data supplied from an authentic user into the box folder.

The schedule server 101 and client PC 105 have standard building elements mounted in a general-purpose computer. The building elements are a CPU, RAM, ROM, hard disk, external storage device, network interface, display, keyboard, mouse, and the like.

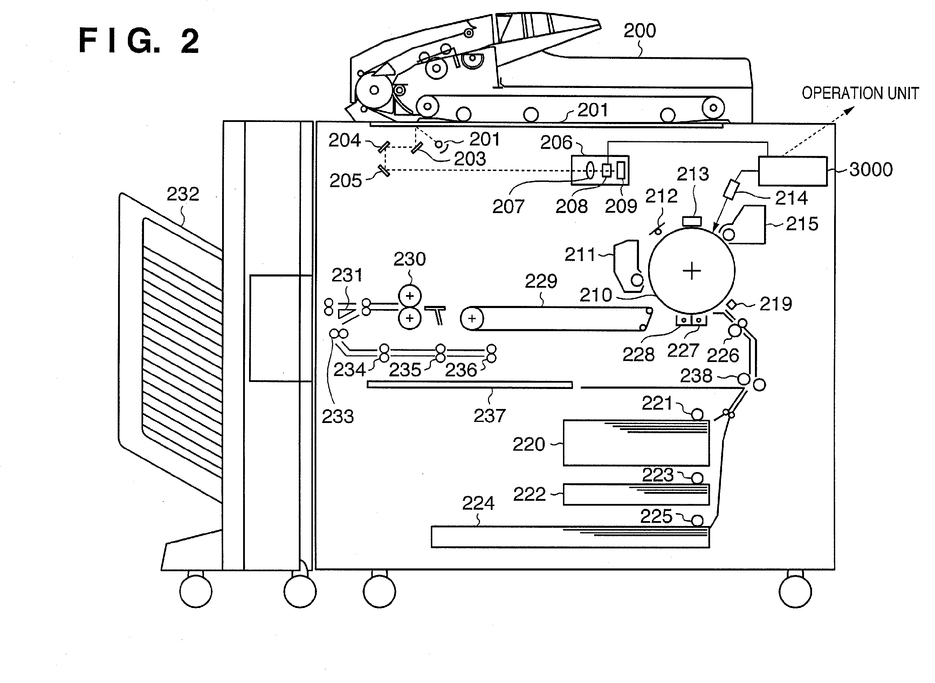

[General Description of Copying Apparatus]
An example of the structure of the digital copying apparatus 102 will be explained with reference to Fig. 2.

Fig. 2 is a sectional view showing the outer appearance of the digital copying apparatus according to the embodiment of the present invention.

Reference numeral 200 denotes an automatic document feeder (to be referred to as a DF hereinafter) which can automatically feed a plurality of document sheets one by one and sequentially set the obverse and reverse of each document sheet on the document table. A concrete structure of the DF 200 is well known, and a detailed description thereof will be omitted.

A plurality of document sheets to be scanned are set on the DF 200. The DF 200 feeds the document sheets set on it one by one onto a document table 201. Reference numeral 202 denotes a document illumination lamp which is formed from, e.g., a halogen lamp and exposes a document set on the document table 201. Reference numerals 203, 204, and 205 denote scanning mirrors which are stored in an optical scanning unit (not shown) and guide light reflected by a document to a CCD unit 206 while reciprocating.

The CCD unit 206 comprises, e.g., an imaging lens 207 which forms light reflected by a document into an image on a CCD, an image sensor 208 formed from a CCD, and a CCD driver 209 which drives the image sensor 208. An image signal output from the image sensor 208 is converted into, e.g., 8-bit digital data, which is input to a controller unit 3000.

Reference numeral 210 denotes a photosensitive drum which is discharged by an exposure lamp 212 in preparation for image formation. Reference numeral 213 denotes a charger which uniformly charges the photosensitive drum 210. Reference numeral 214 denotes an exposure unit formed from a device such as a semiconductor laser. The exposure unit 214 forms an electrostatic latent image by exposing the photosensitive drum 210 on the basis of image data processed by the controller unit 3000 for controlling an image process and the overall apparatus.

Reference numeral 215 denotes a developing unit which stores black developing agent (toner). Reference numeral 219 denotes a pre-transfer charger which applies a high voltage before transferring a toner image developed on the photosensitive drum 210 onto a sheet.

Reference numerals 220, 222, and 224 denote sheet feed units. The sheet feed units 220, 222, and 224 feed transfer sheets (print media) to a predetermined position by driving corresponding pickup rollers 221, 223, and 225. Each sheet temporarily stops at the arrangement position of a registration roller 226, and is fed again in synchronism with the write timing of an image formed on the photosensitive drum 210.

Reference numeral 227 denotes a transfer charger which transfers a toner image developed on the photosensitive drum 210 onto a fed transfer sheet. Reference numeral 228 denotes a separation charger which separates a transfer sheet having undergone the transfer operation from the photosensitive drum 210. A cleaner 211 recovers toner which is not transferred and remains on the photosensitive drum 210.

Reference numeral 229 denotes a convey belt which conveys a transfer sheet having undergone the transfer process to a fixing unit 230. The fixing unit 230 fixes toner onto the transfer sheet by, e.g., heat. Reference numeral 231 denotes a flapper which switches the convey path of the transfer sheet having undergone the fixing process and controls whether to deliver the transfer sheet outside the apparatus or to guide it to the arrangement direction of an intermediate tray 237.

Reference numerals 233 to 236 denote sheet feed rollers which feed a transfer sheet having temporarily undergone the fixing process onto the intermediate tray 237 after reversing the sheet (multiple) or without reversing it (double-sided). Reference numeral 238 denotes a refeed roller which conveys a transfer sheet set on the intermediate tray 237 to the arrangement position of the registration roller 226 again. Reference numeral 232 denotes a staple sorter which sorts and staples copied sheets.

The controller unit 3000 comprises various circuits such as a microcomputer and image processing unit, and executes an image formation operation in accordance with an instruction from the operation unit.

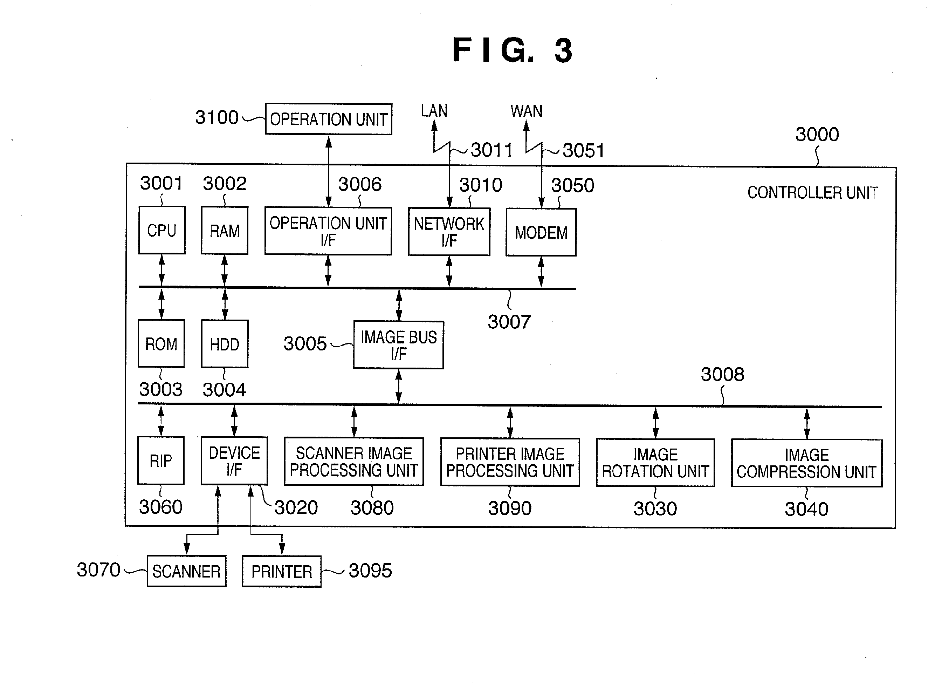

[Detailed Description of Controller Unit] The detailed arrangement of the controller unit 3000 will be explained with reference to Fig. 3.

Fig. 3 is a block diagram showing the detailed arrangement of the controller unit according to the embodiment of the present invention.

The controller unit 3000 connects to a scanner 3070 serving as an image input device and a printer 3095 serving as an image output device, and inputs and outputs image information and device information. The controller unit 3000 connects to a LAN 3011 and public line (WAN) 3051, and inputs and outputs image information and device information.

A CPU 3001 is a controller for controlling the overall system. A RAM 3002 serves as a system work memory for operating the CPU 3001, and also serves as an image memory for temporarily storing image data. A ROM 3003 is a boot ROM which stores the boot program of the system.

An HDD 3004 is a hard disk drive which stores system software and image data. An operation unit I/F 3006 is an interface with an operation unit (UI) 3100 having a touch panel, and outputs, to the operation unit 3100, image data to be displayed on the operation unit 3100. Further, the operation unit I/F 3006 notifies the CPU 3001 of information input by a system user from the operation unit 3100.

A network I/F 3010 connects to the LAN 3011, and inputs and outputs information. A modem 3050 connects to the public line 3051, and inputs and outputs information.

These devices are arranged on a system bus 3007, and exchange data.

An image bus I/F 3005 is a bus bridge which connects the system bus 3007 and an image bus 3008 for transferring image data at high speed, and converts the data structure. The image bus 3008 is formed from a PCI bus or IEEE1394.

The image bus 3008 connects the following devices.

A raster image processor (RIP) 3060 expands a PDL code described in the page description language into a bitmap image. A device I/F 3020 connects the scanner 3070 and printer 3095 to the controller unit 3000, and performs synchronous/asynchronous conversion of image data.

A scanner image processing unit 3080 performs image processes such as correction, processing, and editing for input image data. A printer image processing unit 3090 performs image processes such as printer correction and resolution conversion for printout image data. An image rotation unit 3030 rotates image data. An image compression unit 3040 compresses/decompresses multilevel image data by JPEG and binary image data by JBIG, MMR, or MH.

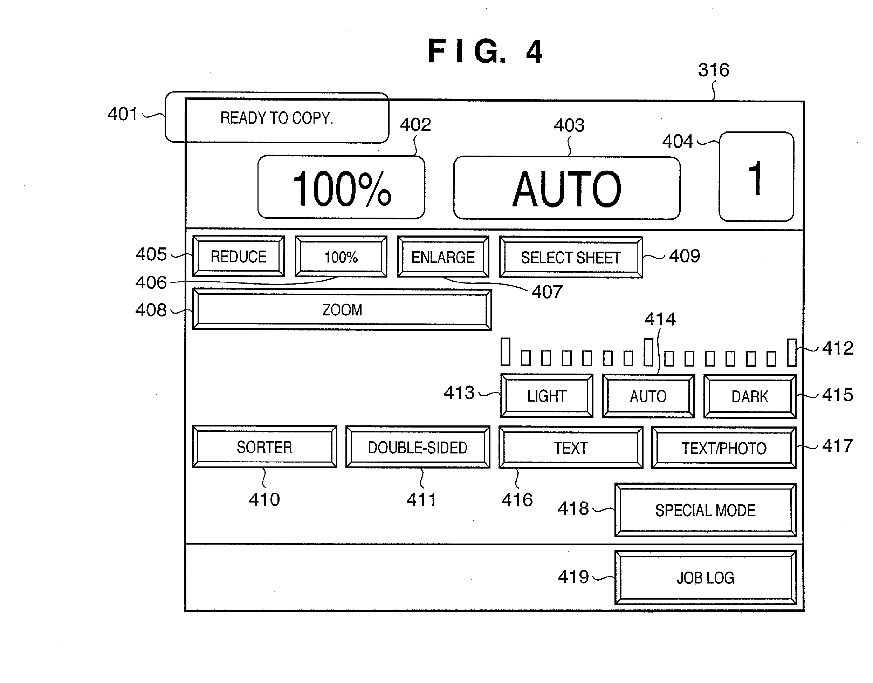

A copy standard window for copying will be described as an operation window displayed on the operation unit 3100 with reference to Fig. 4.

Fig. 4 is a view showing an example of the copy standard window according to the embodiment of the present invention.

The digital copying apparatus 102 serving as an image processing apparatus according to the embodiment starts up with a default copy standard window 316 upon power-on. The copy standard window 316 provides status displays, and various controls (buttons, sliders, and the like) for performing various operations.

Reference numeral 401 denotes a message line which displays a copy job status by a message. Reference numeral 402 denotes a copy ratio display which displays a set copy ratio or a copy ratio automatically determined depending on the copy mode on the percentage basis. Reference numeral 403 denotes a sheet size display which displays a selected output sheet, and when automatic sheet selection is set, displays a message "auto".

Reference numeral 404 denotes an entry display representing a set number of copies. Reference numeral 405 denotes a reduction key used for reduction copying. Reference numeral 406 denotes a "100%" key used to return a set reduction or enlargement ratio to 100%. Reference numeral 407 denotes an enlargement key used for enlargement copying.

Reference numeral 408 denotes a zoom key used to finely set the copy ratio for reduction or enlargement copying. Reference numeral 409 denotes a sheet selection key used to designate an output sheet. Reference numeral 410 denotes a sorter key used to set a sorting or stapling mode. Reference numeral 411 denotes a double-sided key used to set a double-sided mode.

Reference numeral 412 denotes a density display which exhibits the current density and represents a low density on the left side and a high density on the right side. The density display 412 changes in synchronism with a density-down key 413 and density-up key 415. The density-down key 413 is used to decrease the density. Reference numeral 414 denotes an auto key used to set a mode in which the density is automatically determined. The density-up key 415 is used to increase the density.

Reference numeral 416 denotes a text key used to set a text mode in which the density is automatically set to one suitable for copying a text document. Reference numeral 417 denotes a text/photo key used to set a text/photo mode in which the density is automatically set to one suitable for copying a text/photo-mixed document. Reference numeral 418 denotes a special mode key used to set various copy modes and other modes which cannot be set in the copy standard window 316.

Reference numeral 419 denotes a print status key used to check the current print status. The print status key 419 always appears at the same position not only in the copy standard window 316 but also in other windows. By pressing the print status key 419, a user can confirm the print status at any time.

The digital copying apparatus 102 according to the embodiment has a box function capable of saving document data (image data) in a storage medium such as an internal HDD 3004. The box function enables the user to set an arbitrary box folder name as a document data storage destination, in addition to storage destinations of fixed names such as box numbers 0 to 99.

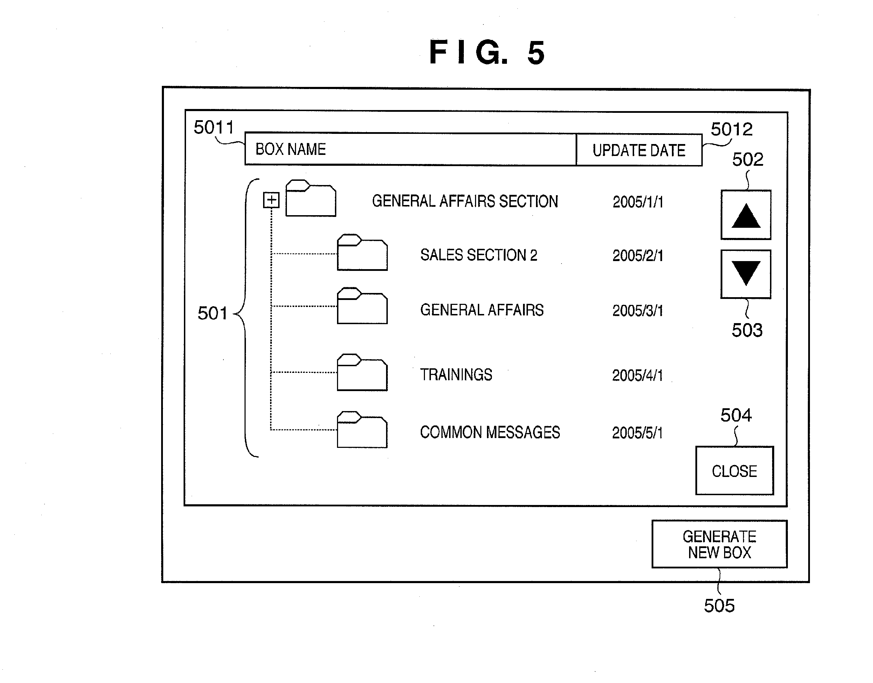

A box list window for performing a box operation in the digital copying apparatus 102 will be explained with reference to Fig. 5.

Fig. 5 is a view showing an example of the box list window according to the embodiment of the present invention.

The box list window can be displayed via, e.g., the operation of the special mode key 418 in the copy standard window 316 (Fig. 4).

In Fig. 5, reference numeral 501 denotes a box information display representing information on boxes managed by the digital copying apparatus 102. The box information display 501 displays a box folder name 5011 and update date 5012. Each box folder name in the box information display 501 has a button, and a user can select a target box by touching a desired box folder name.

Reference numerals 502 and 503 denote up and down cursor keys which allow vertically scrolling the box information display 501 when there are too many box folders to be displayed in one window. Reference numeral 504 denotes a close key used to end the box list window in Fig. 5 and restore to the preceding copy standard window.

Reference numeral 505 denotes a new box folder generation key. When a user presses this key, a soft keyboard for inputting a box name appears, and the user can set a box folder of an arbitrary name via the soft keyboard.

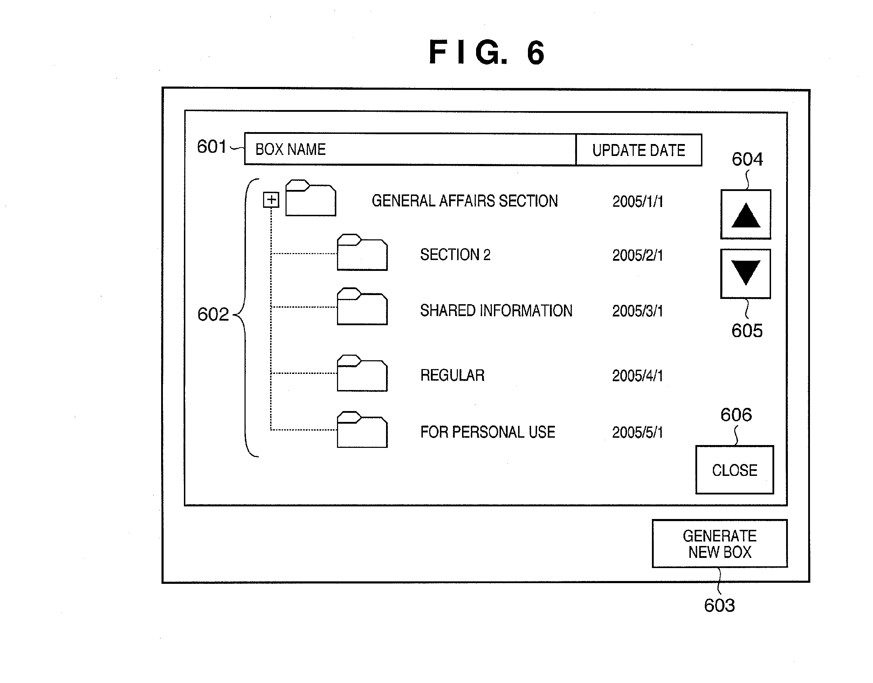

The user can designate a target box folder by touching a corresponding portion of a box folder name displayed in the box list window in Fig. 5. That is, the user designates opening of the box folder, and the box list window displays a box content window (Fig. 6) representing the contents of the designated box folder.

The box content window will be explained with reference to Fig. 6.

Fig. 6 is a view showing an example of the box content window according to the embodiment of the present invention.

In the box content window of Fig. 6, a box information display 602 displays box folders formed in a selected box folder 601. When a plurarity of box folders exist, the box information display 602 displays their configuration.

A user can newly generate a box folder by operating a new generation key 603 in the box content window of Fig. 6, similar to the box list window of Fig. 5. In this case, a new box folder is generated in the box folder 601.

Reference numerals 604 and 605 denote up and down cursor keys which allow vertically scrolling the box information display 602 when there are too many box folders to be displayed in one window. Reference numeral 606 denotes a close key used to end the display of the box content window in Fig. 6 and restore to the preceding box list window in Fig. 5.

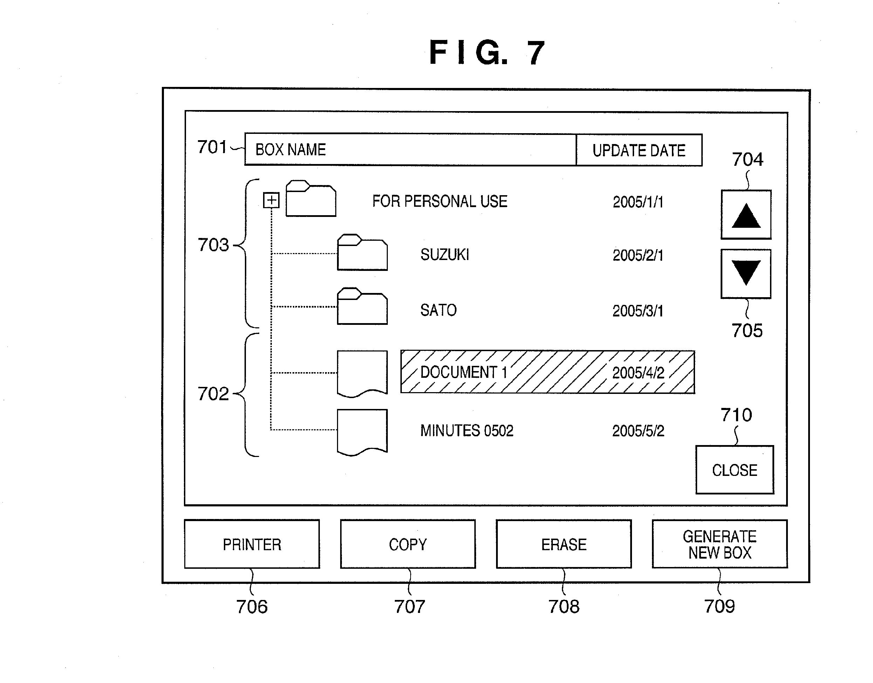

When a user selects, e.g., a box folder name "for personal use" in the box content window of Fig. 6, a detailed box content window (Fig. 7) representing the contents of the box folder appears.

A detailed box content window will be described with reference to Fig. 7.

Fig. 7 is a view showing an example of the detailed box content window according to the embodiment of the present invention.

The detailed box content window in Fig. 7 displays a plurality of documents 702 stored in a selected box folder 701. A user can select, from the documents 702, a document subjected to an operation such as output (printing) onto a print sheet (paper sheet), copying, or erase.

When the selected box folder 701 further stores a plurarity of box folders 703, the detailed box content window displays the box folders 703. The user can also select the box folders 703 to select a plurarity of documents stored in them.

For the document 702 dislayed in the detailed box content window of Fig. 7, document information, the date and time when the document is stored, and the name of the document are displayed.

A currently selected document is highlighted, and a user can change the selected document by touching the document name. For example, a document of a document name "document 1" is selected in Fig. 7.

Reference numeral 704 and 705 denote up and down cursor keys which allow vertically scrolling the document information display 702 (or box folders (box information display) 703) when there are too many documents to be displayed in one window.

Reference numeral 706 denotes a print key. After selecting a document, a user presses this key to print and output the document onto a print sheet (paper sheet).

Reference numeral 707 denotes a copy key used to copy a selected document. Reference numeral 708 denotes an erase key used to erase a document in a box without outputting it onto a print sheet (paper sheet). Reference numeral 709 denotes a new generation key used to generate a new box folder.

Reference numeral 710 denotes a close key used to end the display of the detailed box content window in Fig. 7 and return to the preceding box content window in Fig. 6.

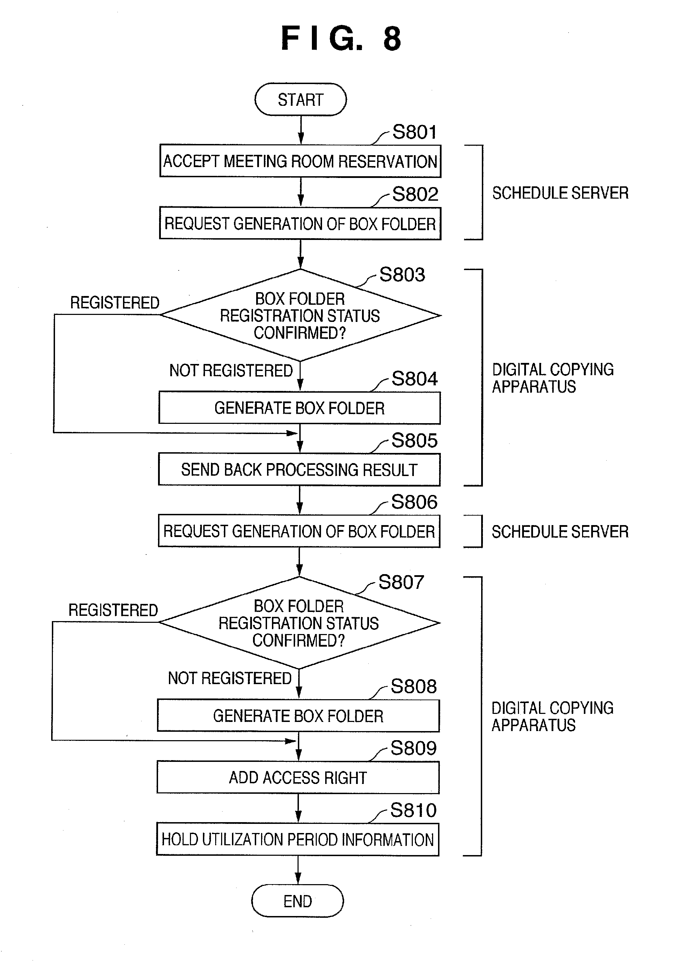

A box folder generation process will be described with reference to Fig. 8.

Fig. 8 is a flowchart showing the box folder generation process according to the embodiment of the present invention.

In step S801, the schedule server 101 registers meeting room reservation information on the basis of a request from the client PC 105.

The schedule server 101 holds all the reservation statuses of meeting rooms managed by the schedule server 101 in the reservation management table 106. The schedule server 101 also holds information on digital copying apparatuses installed in the respective meeting rooms, or can acquire the information.

When registering meeting room reservation information in step S801, the schedule server 101 also registers a meeting name and user name in addition to a meeting room and utilization period.

In step S802, the schedule server 101 specifies a digital copying apparatus 102 installed in the meeting room on the basis of the registered meeting room reservation information. The schedule server 101 issues, to the specified digital copying apparatus 102, a request to generate a box folder whose name is a meeting name contained in the registered meeting room reservation information.

In step S803, the digital copying apparatus 102 which has accepted the generation request from the schedule server 101 confirms the box folder registration status.

If no box folder having the same name exists as a result of confirmation, the process advances to step S804. The digital copying apparatus 102 generates a box folder with the name designated by the generation request, and the process advances to step S805. At this time, the meeting name registered in the schedule server 101 need not always coincide with the box folder name of the digital copying apparatus 102. For example, the schedule server 101 or digital copying apparatus 102 may hold management information capable of making a meeting name correspond to a box folder name, and associate them with each other, as needed.

In step S805, the digital copying apparatus 102 completes generation of the designated box folder, and sends back folder generation completion information to the schedule server 101.

If a box folder having the same name exists in step S803, the process advances to step S805 without generating any box folder. The digital copying apparatus 102 notifies the schedule server 101 that the box folder having the same name exists.

In step S806, the schedule server 101 issues, to the digital copying apparatus 102, a request to generate a box folder with a name based on the utilization period contained in the registered meeting room reservation information.

This generation request designates generation of a box folder in a box folder designated by the generation request in step S802. Together with this generation request, the schedule server 101 also designates addition of an access right to the box folder and utilization period information setting of the box folder on the basis of a user name and utilization period contained in the registered meeting room reservation information.

In step S807, the digital copying apparatus 102 confirms its box folder registration status. If no box folder with the name set on the basis of the designated meeting name exists in the box folder serving as a generation request destination as a result of confirmation, the process advances to step S808. If a box folder with the name set on the basis of the designated meeting name exists, the process advances to step S809.

In step S808, the digital copying apparatus 102 generates a box folder with the name designated by the generation request. In step S809, the digital copying apparatus 102 adds an access right to the user name designated in step S806.

In step S810, the digital copying apparatus 102 holds the box folder generated in step S808 and the utilization period information designated in step S806 in association with each other.

Assume that the utilization period information is "2005/5/1 13:00 - 15:00" and user names are "user AAA, user BBB, and user CCC". In this case, the digital copying apparatus 102 generates a box folder of a box folder name "20050501_1300-1500". The box folder gives an access right to "users AAA, BBB, and CCC".

The digital copying apparatus 102 holds "users AAA, BBB, and CCC" and "2005/5/1 13:00 - 15:00" as access right information and utilization period information corresponding to the box folder.

The digital copying apparatus 102 generates a box folder in a box folder storage area (data storage area) ensured in the HDD 3004. A file system capable of identifiably managing box folders manages access to the box folders in the box folder storage area.

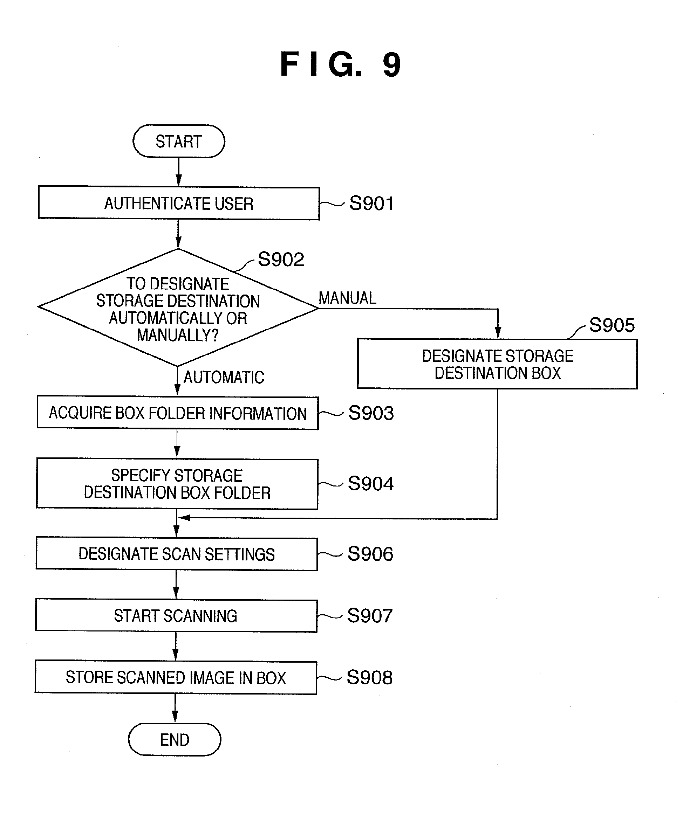

A box registration process when registering a scanned image in a box folder will be described with reference to Fig. 9.

Fig. 9 is a flowchart showing the box registration process when registering a scanned image in a box folder according to the embodiment of the present invention.

When the scanner 3070 of the digital copying apparatus 102 is to register a scanned image, user authentication is performed to specify an operation user in step S901. In user authentication, for example, the user inputs a user authentication password from the operation unit 3100. When the digital copying apparatus 102 has a dedicated authentication reader, the authentication reader reads a user authentication card to authenticate a user.

In step S902, the user selects whether to automatically or manually designate a (storage destination) box folder for storing an image to be processed. By displaying a selection window on the operation unit 3100, this selection is made by a user operation to the selection window.

If the user selects automatic designation in step S902, the process advances to step S903. In step S903, the digital copying apparatus 102 acquires current time information from an internal timer. In addition, the digital copying apparatus 102 acquires utilization period information which is set by the schedule server 101 in association with the box folder and the user information acquired in step S901.

In step S904, the digital copying apparatus 102 specifies a storage destination box folder from the information acquired in step S903, and the process advances to step S906.

Referring to Fig. 1, for example, the use time of the digital copying apparatus 102 when user AAA operates the digital copying apparatus 102 in meeting room A and registers a scanned image is "2005/5/20 13:20". In this case, a box folder whose access right information contains the user name "AAA" and whose utilization period information held in association with the box folder contains the use time of the digital copying apparatus 102 is specified. In Fig. 1, the storage destination box folder is a box folder of a box folder name "20050520_1300-1500".

If the user selects manual designation in step S902, the process advances to step S905. The digital copying apparatus 102 accepts an operation to designate a box folder for storing an image, and designates a storage destination box folder. Then, the process advances to step S906.

In step S906, the digital copying apparatus 102 designates scan settings associated with a scanning operation such as an image process, on the basis of a user operation to the operation unit 3100. In step S907, the digital copying apparatus 102 issues a scanning start instruction on the basis of a user operation to the operation unit 3100, and the scanner 3070 scans an image.

In step S908, the digital copying apparatus 102 stores the scanned image in the storage destination box folder designated in step S904 or S905.

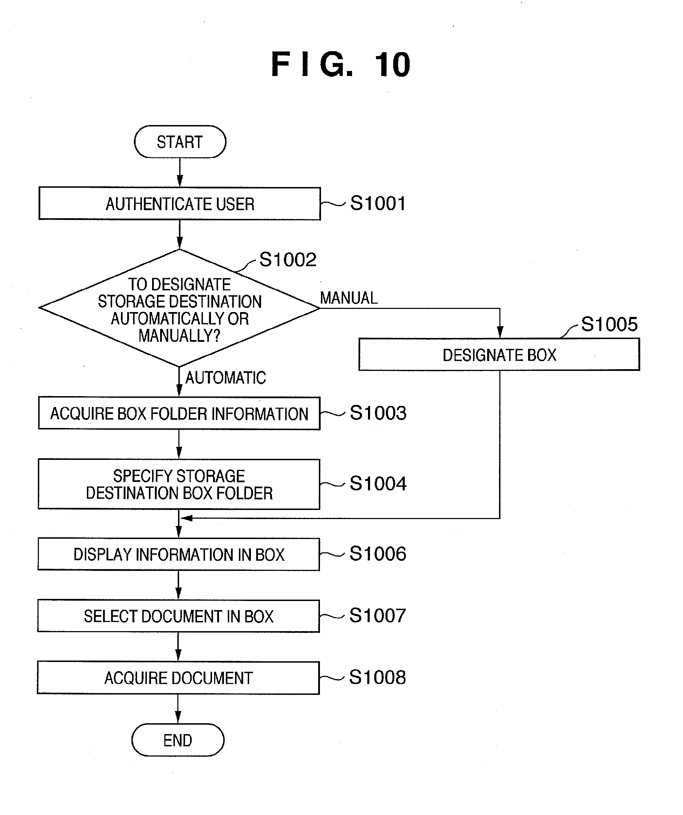

A data acquisition process when acquiring data from a box folder will be explained with reference to Fig. 10.

Fig. 10 is a flowchart showing the data acquisition process according to the embodiment of the present invention.

When acquiring data from a box folder, user authentication is performed to specify an operation user in step S1001. In user authentication, for example, the user inputs a user authentication password from the operation unit 3100. When the digital copying apparatus 102 has a dedicated authentication reader, the authentication reader reads a user authentication card to authenticate a user.

In step S1002, the user selects whether to automatically or manually designate a (storage destination) box folder for storing data to be acquired. By displaying a selection window on the operation unit 3100, this selection is made by a user operation to the selection window.

If the user selects automatic designation in step S1002, the process advances to step S1003. In step S1003, the digital copying apparatus 102 acquires current time information from an internal timer. In addition, the digital copying apparatus 102 acquires utilization period information which is set by the schedule server 101 in association with the box folder and the user information acquired in step S1001.

In step S1004, the digital copying apparatus 102 specifies a storage destination box folder from the information acquired in step S1003, and the process advances to step S1006.

Referring to Fig. 1, for example, the use time of the digital copying apparatus 102 when user AAA operates the digital copying apparatus 102 in meeting room A is "2005/5/20 13:20", similar to step S904 in Fig. 9. In this case, a box folder whose access right information contains the user name "AAA" and whose utilization period information held in association with the box folder contains the use time of the digital copying apparatus 102 is specified. In Fig. 1, the storage destination box folder is a box folder of a box folder name "20050520_1300-1500".

If the user selects manual designation in step S1002, the process advances to step S1005. The digital copying apparatus 102 accepts an operation to designate a box folder for storing data, and designates a storage destination box folder. Then, the process advances to step S1006.

In step S1006, the operation unit 3100 displays information in the box folder specified in step S1004 or S1005. An example of this display is the detailed box content window in Fig. 7.

In step S1007, the digital copying apparatus 102 selects a document (image data) to be processed on the basis of a user operation to the operation unit 3100.

In step S1008, the digital copying apparatus 102 acquires the selected document (image data) for the purpose of, e.g., a print instruction and a preview operation to display the contents of the document on the operation unit 3100.

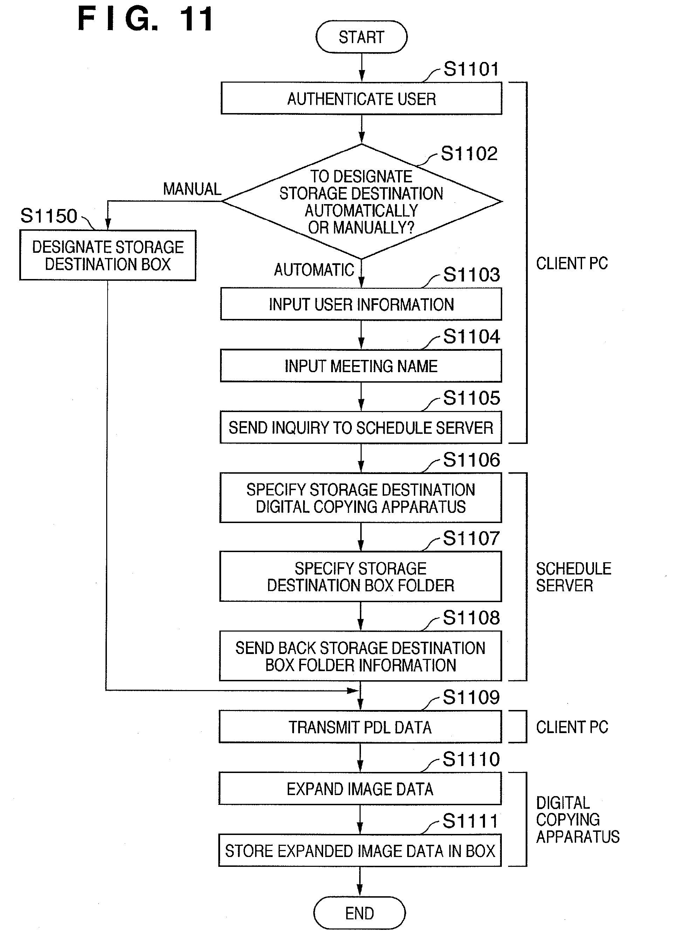

A registration process when registering a PDL image in a box folder will be explained with reference to Fig. 11.

Fig. 11 is a flowchart showing the box registration process when registering a PDL image in a box folder according to the embodiment of the present invention.

Registration of a PDL image means registration in the box folder of the digital copying apparatus 102 from, e.g., the client PC 105.

In step S1101, a user makes print settings from the client PC 105. The contents of print settings are, for example, the number of copies, the sheet size, the scaling ratio, single/double-sided, page output order, sorting output, and stapling/non-stapling. The setting contents are generated as print setting parameters.

In step S1102, the user selects whether to automatically or manually designate a (storage destination) box folder for storing an image to be processed. By displaying a selection window on the client PC 105, this selection is made by a user operation to the selection window.

If the user selects manual designation in step S1102, the process advances to step S1150. The user sets a storage destination box folder and a user authentication user name and password in the client PC 105, and the process advances to step S1109.

If the user selects automatic designation in step S1102, the process advances to step S1103, and the user inputs user authentication user information (user name and password).

In step S1104, the user inputs a name registered in the schedule server 101 as the name of a meeting using the box folder to be registered.

In step S1105, the client PC 105 transmits the input user information and meeting name to the schedule server 101.

In step S1106, the schedule server 101 selects a matching meeting name from meeting names registered in the schedule server 101 on the basis of the information transmitted in step S1105 and the current time information. The schedule server 101 selects a meeting whose time is the closest to the current time, from meetings having the matching name. The schedule server 101 specifies a digital copying apparatus 102 installed in the meeting room of the selected meeting.

In step S1107, the schedule server 101 specifies a box folder formed in the specified digital copying apparatus 102.

Referring to Fig. 1, for example, the client PC 105 transmits a meeting name "F-iR Meeting" and a user name "user AAA" to the schedule server 101, and the transmission time is "2005/5/4 10:00". In this case, the schedule server 101 selects (2) meeting A "2005/5/10 13:00 - 15:00" closest to the transmission time among meetings of the same name registered in the schedule server 101.

The schedule server 101 determines, from the meeting name "F-iR Meeting" corresponding to the digital copying apparatus 102 installed in meeting room A, that the storage destination box is a box folder "FiR Meeting" present in the digital copying apparatus 102.

In this case, the meeting name registered in the schedule server 101 is the same as the box folder name of the digital copying apparatus 102, but they need not always coincide with each other. For example, the schedule server 101 or digital copying apparatus 102 may hold management information capable of making a meeting name correspond to a box folder name, and associate them with each other, as needed. It is also possible to specify a meeting from the schedule and select a corresponding box folder.

In step S1108, the schedule server 101 sends back, as storage destination box folder information to the client PC 105, the box folder of the digital copying apparatus specified in steps S1106 and S1107.

In step S1109, the user inputs a print instruction from the client PC 105. At the same time, driver software installed in the client PC 105 converts code data to be printed into so-called PDL data. The client PC 105 transmits the PDL data, storage destination box folder information, and user information to the digital copying apparatus 102 having the storage destination box folder in step S1108 or S1150, together with the print setting parameters set in step S1101.

In step S1110, the digital copying apparatus 102 expands (rasterizes) the received PDL data into image data. Upon completion of image data expansion, the process advances to step S1111.

In step S1111, the digital copying apparatus 102 sequentially stores the expanded image data into the designated storage destination box folder. At this time, the digital copying apparatus 102 also stores the print setting parameters set in step S1101.

As described above, according to the embodiment, meeting room reservation information such as the meeting room name, meeting name, user name, and use period is registered in the schedule server which manages the schedule of using a meeting room. Upon registration, the box function of a digital copying apparatus installed in a meeting room for use is utilized to generate a new box folder with a name capable of specifying a meeting name. A box folder corresponding to each meeting time is generated in the box folder. A user name at each meeting registered in the schedule server is set as an access right to the box folder. Access from the operation unit 3100 to the created box folder for the meeting is limited only during the meeting time. After the end of the meeting, the box folder is automatically erased upon the lapse of a predetermined time. Information saved in the box folder is backed up in the server on the network, and only a user having the access right can refer to the information.

When the same meeting is to continue later, information in the box folder may be copied into a box folder for the succeeding meeting, or information backed up in the server may be copied. For this purpose, the schedule server assigns an ID capable of identifying two meetings as the same meeting, and information in the box folder or the like is copied on the basis of the ID.

All the pieces of reservation information need not be indispensable, and necessary ones of them can be selected in the system configuration.

When storing a document in a box in a meeting room, the use time and user name are confirmed to specify a storage destination box folder on the basis of the time and user name registered in the schedule server. Since the digital copying apparatus automatically determines the data storage destination, the user need not be aware of the data storage destination and can access a target save box folder without knowing the location. The present invention can provide this user-friendly document management system.

The schedule server 101 and digital copying apparatus 102 are built separately in the above embodiment, but may be integrated to practice the present invention.

The box folder exists in the digital copying apparatus, but may be the storage device of a server computer or the like separately arranged on the network. In this case, meeting materials can be stored from various digital copying apparatuses and computer terminals.

In this case, a meeting list is displayed upon confirming a user name. When the user selects a desired meeting from the list, a box folder is specified and stores materials. When reading out the materials, the user name is confirmed to permit the user to read them out. Alternatively, the user may be permitted to read out the materials from a digital copying apparatus installed in the meeting room.

The digital copying apparatus is installed in a meeting room in the above embodiment, but the present invention is not limited to this. For example, the present invention is also applicable to even a digital copying apparatus installed in an arbitrary location (e.g., public facilities) or a private room.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

Note that the present invention can be applied to an apparatus comprising a single device or to system constituted by a plurality of devices.

Furthermore, the invention can be implemented by supplying a software program, which implements the functions of the foregoing embodiments, directly or indirectly to a system or apparatus, reading the supplied program code with a computer of the system or apparatus, and then executing the program code. In this case, so long as the system or apparatus has the functions of the program, the mode of implementation need not rely upon a program.

Accordingly, since the functions of the present invention are implemented by computer, the program code installed in the computer also implements the present invention. In other words, the claims of the present invention also cover a computer program for the purpose of implementing the functions of the present invention.

In this case, so long as the system or apparatus has the functions of the program, the program may be executed in any form, such as an object code, a program executed by an interpreter, or scrip data supplied to an operating system.

Example of storage media that can be used for supplying the program are a floppy disk, a hard disk, an optical disk, a magneto-optical disk, a CD-ROM, a CD-R, a CD-RW, a magnetic tape, a non-volatile type memory card, a ROM, and a DVD (DVD-ROM and a DVD-R).

As for the method of supplying the program, a client computer can be connected to a website on the Internet using a browser of the client computer, and the computer program of the present invention or an automatically-installable compressed file of the program can be downloaded to a recording medium such as a hard disk. Further, the program of the present invention can be supplied by dividing the program code constituting the program into a plurality of files and downloading the files from different websites. In other words, a WWW (World Wide Web) server that downloads, to multiple users, the program files that implement the functions of the present invention by computer is also covered by the claims of the present invention.

It is also possible to encrypt and store the program of the present invention on a storage medium such as a CD-ROM, distribute the storage medium to users, allow users who meet certain requirements to download decryption key information from a website via the Internet, and allow these users to decrypt the encrypted program by using the key information, whereby the program is installed in the user computer.

Besides the cases where the aforementioned functions according to the embodiments are implemented by executing the read program by computer, an operating system or the like running on the computer may perform all or a part of the actual processing so that the functions of the foregoing embodiments can be implemented by this processing.

Furthermore, after the program read from the storage medium is written to a function expansion board inserted into the computer or to a memory provided in a function expansion unit connected to the computer, a CPU or the like mounted on the function expansion board or function expansion unit performs all or a part of the actual processing so that the functions of the foregoing embodiments can be implemented by this processing.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.
A data storage area dedicated to reservation information is generated in an image storage unit on the basis of the reservation information specified by using an image processing apparatus. An access right to the generated data storage area is set on the basis of the reservation information. A data storage area serving as the storage destination of the image data is determined on the basis of the current time information when image data to be processed is input, and the reservation information corresponding to the data storage area generated in the image storage unit.

## Claims

1. An image processing apparatus having an image storage unit which stores input image data, **characterized by** comprising:
a generation unit adapted to generate a data storage area corresponding to reservation information in the image storage unit on the basis of the reservation information specified by using the image processing apparatus;
a setting unit adapted to set an access right to the data storage area generated by said generation unit, on the basis of the reservation information; and
a determination unit adapted to determine a data storage area serving as a storage destination of the image data on the basis of current time information when image data to be processed is input, and the reservation information corresponding to the data storage area generated in the image storage unit.

2. The apparatus according to claim 1, **characterized in that** the reservation information contains a meeting room name of a meeting where the image processing apparatus is installed, a meeting name of the meeting to be held in the meeting room, a name of a user who is to participate in the meeting, and a utilization period of the meeting room.

3. The apparatus according to claim 2, **characterized in that** said generation unit comprises a name setting unit adapted to generate the data storage area as a folder and set a folder name of the folder on the basis of the meeting name contained in the reservation information.

4. The apparatus according to claim 2, **characterized in that** said generation unit comprises a name setting unit adapted to generate the data storage area as a folder and set a folder name of the folder on the basis of the utilization period of the meeting room contained in the reservation information.

5. The apparatus according to claim 2, **characterized in that** said setting unit sets the user name contained in the reservation information as an access right to the data storage area.

6. The apparatus according to claim 1, further **characterized by** comprising an authentication unit adapted to authenticate a user who operates the image processing apparatus.

7. The apparatus according to claim 1, **characterized in that** said determination unit determines the data storage area serving as the storage destination of the image data on the basis of the current time information when image data to be processed is input, and a utilization period and user name contained in the reservation information corresponding to the data storage area generated in the image storage unit.

8. The apparatus according to claim 1, further **characterized by** comprising:
an authentication unit adapted to authenticate a user who operates the image processing apparatus;
a specification unit adapted to specify a data storage area having an access right of a user name authenticated by said authentication unit; and
a display unit adapted to display information stored in the data storage area specified by said specification unit.

9. An information processing apparatus which connects to an external terminal and an image processing apparatus via a network and manages a schedule of using a meeting room where the image processing apparatus is installed, **characterized by** comprising:
a registration unit adapted to register reservation information received from the external terminal in a storage medium;
a specification unit adapted to specify an image processing apparatus installed in a meeting room designated by the reservation information registered by said registration unit; and
an issue unit adapted to issue a request to generate a data storage area corresponding to the reservation information in an image storage unit of the image processing apparatus specified by said specification unit.

10. The apparatus according to claim 9, further **characterized by** comprising:
a data storage area specification unit adapted to specify a data storage area in the image processing apparatus serving as a storage destination of data when receiving a user name of the external terminal and a meeting name together with a data storage request from the external terminal; and
a notification unit adapted to notify the external terminal of storage destination information representing the data storage area specified by said data storage area specification unit.

11. An information processing system configured by connecting, via a network, an external terminal, an image processing apparatus, and an information processing apparatus which manages a schedule of using a meeting room where the image processing apparatus is installed, **characterized in that**
the information processing apparatus comprises
a registration unit adapted to register reservation information received from the external terminal in a storage medium,
an specification unit adapted to specify an image processing apparatus installed in a meeting room designated by the reservation information registered by said registration unit, and
an issue unit adapted to issue a request to generate a data storage area corresponding to the reservation information in an image storage unit of the image processing apparatus specified by said specification unit, and
the image processing apparatus comprises
a generation unit adapted to generate a data storage area corresponding to reservation information in the image storage unit on the basis of the reservation information contained in the generation request received from the information processing apparatus,
a setting unit adapted to set an access right to the data storage area generated by said generation unit, on the basis of the reservation information, and
a determination unit adapted to determine a data storage area serving as a storage destination of the image data on the basis of current time information when image data to be processed is input, and the reservation information corresponding to the data storage area generated in the image storage unit.

12. A method of controlling an image processing apparatus having an image storage unit which stores input image data, **characterized by** comprising:
a generation step of generating a data storage area corresponding to reservation information in the image storage unit on the basis of the reservation information specified by using the image processing apparatus;
a set step of setting an access right to the data storage area generated in the generation step on the basis of the reservation information; and
a determination step of determining a data storage area serving as a storage destination of the image data on the basis of current time information when image data to be processed is input, and the reservation information corresponding to the data storage area generated in the image storage unit.

13. A program stored in a computer-readable medium, for causing a computer to execute control of an image processing apparatus having an image storage unit which stores input image data, the program causing the computer to execute:
a generation step of generating a data storage area corresponding to reservation information in the image storage unit on the basis of the reservation information specified by using the image processing apparatus;
a set step of setting an access right to the data storage area generated in the generation step on the basis of the reservation information; and
a determination step of determining a data storage area serving as a storage destination of the image data on the basis of current time information when image data to be processed is input, and the reservation information corresponding to the data storage area generated in the image storage unit.

14. A method of controlling an information processing apparatus which connects to an external terminal and an image processing apparatus via a network and manages a schedule of using a meeting room where the image processing apparatus is installed, **characterized by** comprising:
a registration step of registering reservation information received from the external terminal in a storage medium;
a specification step of specifying an image processing apparatus installed in a meeting room designated by the reservation information registered in the registration step; and
an issuance step of issuing a request to generate a data storage area corresponding to the reservation information in an image storage unit of the image processing apparatus specified in the specification step.

15. A program stored in a computer readable-medium, for causing a computer to execute control of an information processing apparatus which connects to an external terminal and an image processing apparatus via a network and manages a schedule of using a meeting room where the image processing apparatus is installed, the program causing the computer to execute:
a registration step of registering reservation information received from the external terminal in a storage medium;
a specification step of specifying an image processing apparatus installed in a meeting room designated by the reservation information registered in the registration step; and
an issuance step of issuing a request to generate a data storage area corresponding to the reservation information in an image storage unit of the image processing apparatus specified in the specification step.
